# EUROPEAN PATENT APPLICATION

(11) **EP 1 886 609 A1**
(43) Date of publication of application: **13.02.2008**
(21) Application number: 07252908.4
(22) Date of filing: 23.07.2007
(51) Int. Cl.: A47J 43/24, F16B 47/00

(54) **A kitchen utensil with a suction base mechanism**

(30) Priority: 08.08.2006 US 463244
(71) Applicant: So, Kwok Kuen, Hong Kong (HK)
(72) Inventor: Wan, Abel Yiu Chung, Tseun Wan, New Territories, Hong Kong (CN)
(74) Representative: Howe, Steven

(57) **Abstract**

A kitchen utensil, such as a salad spinner (10), is disclosed as including a bowl (12) and a suction base mechanism (14) for resting on a support surface (50), in which when the suction base mechanism (14) rests on the surface (50), the bowl (12) is swivellable relative to the suction base mechanism (14) between a first position in which the space (S₁) between the suction base mechanism (14) and the surface (50) is of a first volume and a second position in which the space (S₂) between the suction base mechanism (14) and the surface (50) is of a second volume which is larger than the first volume to releasably secure said salad spinner (10) to the surface (50).

## Description

This invention relates to a kitchen utensil with a suction base mechanism, and in particular such a utensil securable to a support surface by the mechanism.

### Background of the Invention

There are in existence a large variety of kitchen utensils which, when in use, are supported on and by a working top. Such kitchen utensils may include meat choppers, potato chippers, electric blenders and salad spinners. In order to enhance the working of such utensils, it is desirable to secure the utensil to the working top.

One existing mechanism for securing a kitchen utensil to a working top includes a suction base made of a resilient material. When in use, the user presses the utensil against the working top to drive out some of the air trapped between the suction base and the working top so that the air pressure in the space between the suction base and the working top is lower than the ambient atmospheric pressure. It is found in practice that the suction force between such a kitchen utensil and the working top is relatively weak and will decrease during use, such that performance and safety of the utensil are adversely affected.

It is thus an object of the present invention to provide a kitchen utensil in which the aforesaid shortcomings are mitigated, or at least to provide a useful alternative to the public.

### Summary of the Invention

According to the present invention, there is provided a kitchen utensil including a body member and a suction member adapted to rest on a support surface, wherein when said suction member rests on said surface, said body member is swivellable relative to said suction member between a first position in which the space between said suction member and said surface is of a first volume and a second position in which the space between said suction member and said surface is of a second volume which is larger than said first volume to releasably secure said utensil to said surface.

### Brief Description of the Drawings

A preferred embodiment of the present invention will now be described, by way of example only, with reference to the accompanying drawings, in which:
Fig. 1 is a side view of a salad spinner according to a preferred embodiment of the present invention;
Fig. 2 is a bottom view of the salad spinner of Fig. 1;
Fig. 3 is a bottom perspective view of the salad spinner of Fig. 1;
Fig. 4 is a sectional view taken along line A-A of Fig. 2;
Fig. 5 is an exploded view of the salad spinner of Fig. 1;
Fig. 6 is an enlarged exploded view of the suction base mechanism of the salad spinner shown in Fig. 5;
Fig. 7 is a sectional view of the suction pad shown in Fig. 6;
Fig. 8 is an enlarged view showing engagement between a screw fixed to the body and a metal plate fixed to the suction pad of the salad spinner of Fig. 1;
Figs. 9 and 10 show the relative positions between the screw and the metal plate during movement of the body relative to the suction base mechanism of the salad spinner of Fig. 1;
Figs. 11A and 11B are, respectively, a perspective view and a partial sectional view showing the body in a first position relative to the suction base mechanism; and
Figs. 12A and 12B are, respectively, a perspective view and a partial sectional view showing the body in a second position relative to the suction base mechanism.

### Detailed Description of the Preferred Embodiment

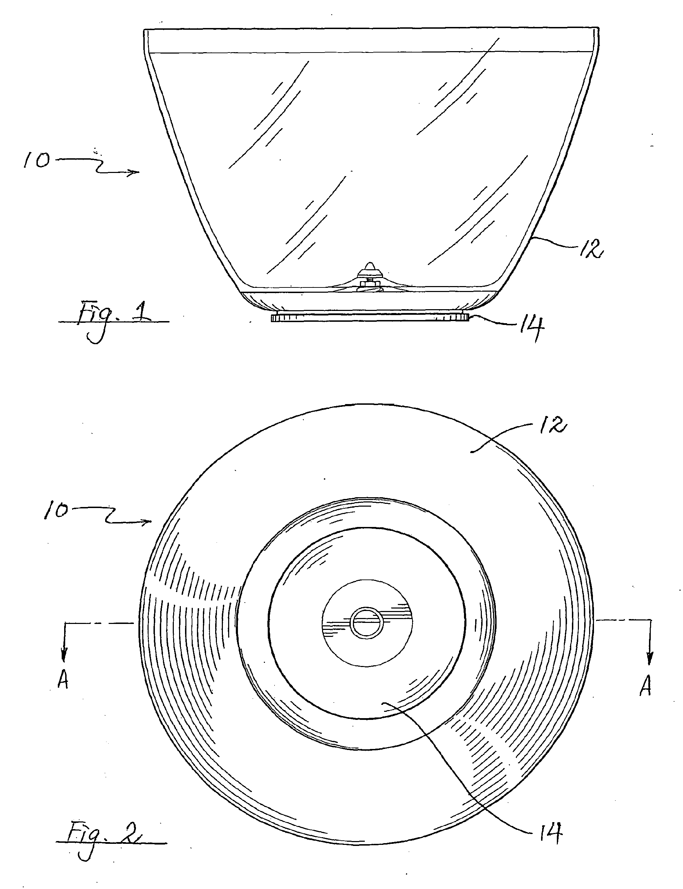

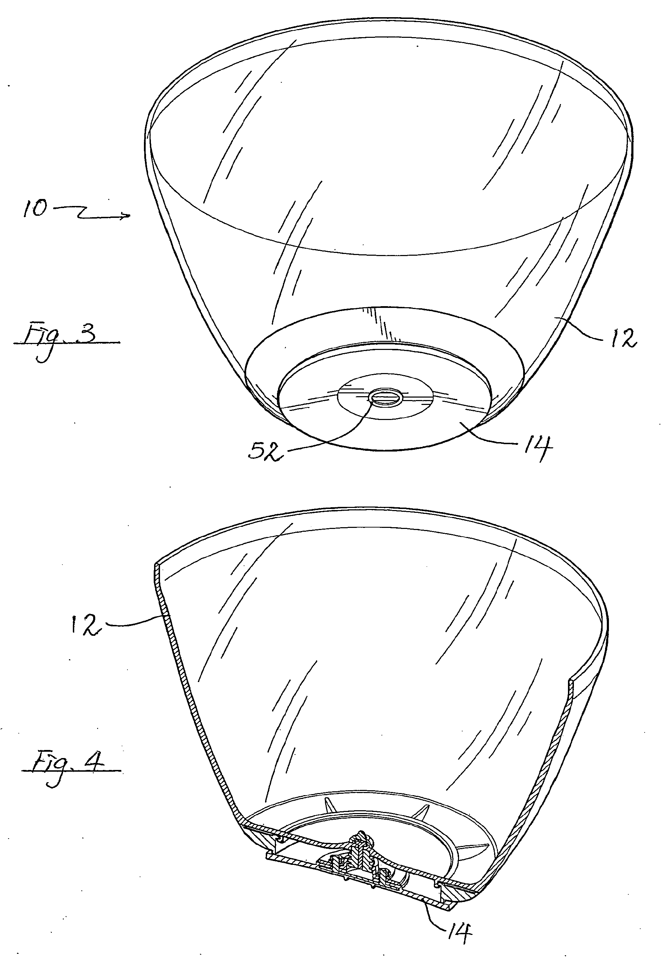

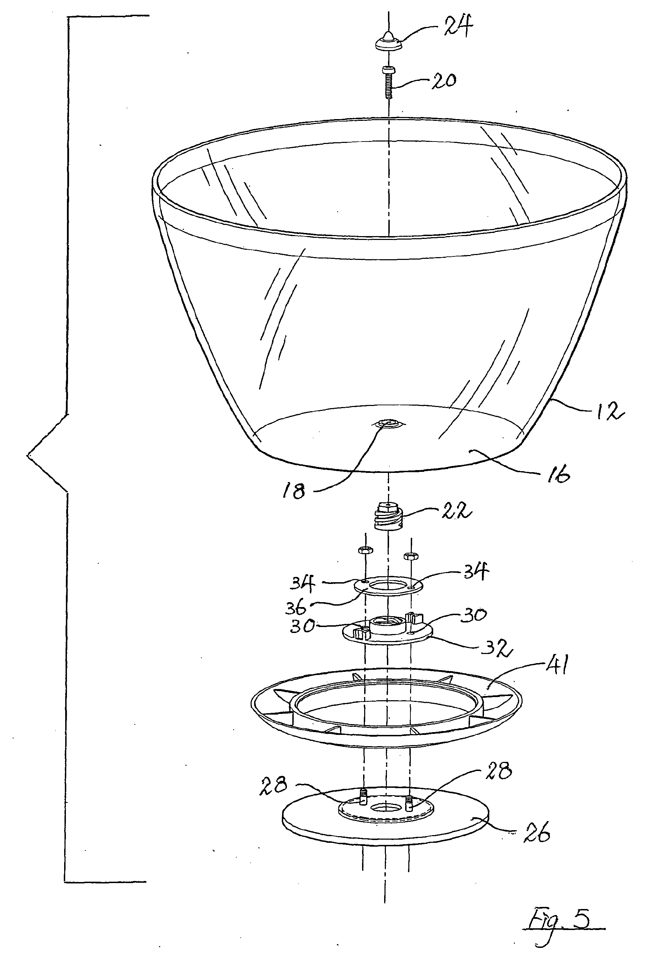

A kitchen utensil in the form of a salad spinner according to a preferred embodiment of the present invention is shown in Figs. 1 to 4, generally designated as 10.

The salad spinner 10 includes an outer transparent bowl 12 engaged with a suction base mechanism 14, in a manner to be further discussed below. For clarity purpose, the other structures of the salad spinner, such as a perforated basket for containing the food to be dried and the driving mechanism for causing the perforated basket to rotate relative to the outer bowl 12 to spin out the water in the food to the outer bowl 12, are not shown here.

As shown in more detail in Fig. 5, a bottom 16 of the bowl 12 is provided with a hole 18 through which a screw 20 is received from above. The threaded part of the screw 20 is received within an internally threaded portion of a larger screw 22, which is also externally threaded, to fixedly engage the screws 20, 22 to the bottom 16 of the bowl 12, and thus to the bowl 12, for simultaneous movement. For aesthetic purpose, a cap 24 is fixed on the head of the screw 20.

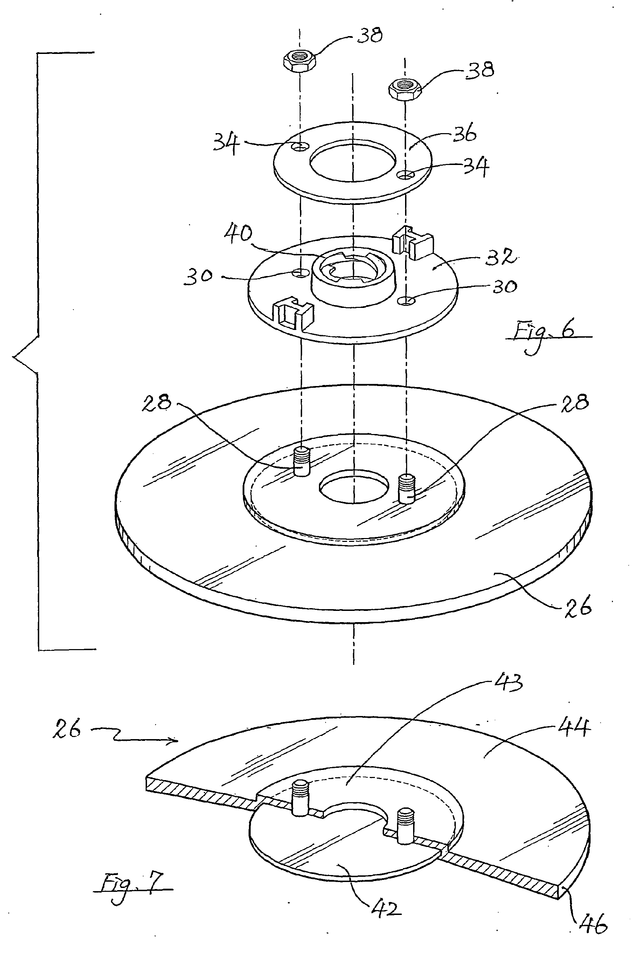

As shown in Figs. 5 and 6, the suction base mechanism 14 includes a suction pad 26 with two upstanding threaded posts 28 extending through two holes 30 of a circular plastic plate 32. The posts 28 also extend through two holes 34 of a metal ring 36. Two nuts 38 are threaded onto the threaded portion of the posts 28 to secure the suction pad 26, the plate 32 and the ring 36 together for simultaneous movement. A central internally threaded post 40 is provided on the plate 32 for threaded engagement with the screw 22, the purpose of which will be further discussed below.

It can also be seen in Fig. 5 that an annular ring 41 is provided between the bowl 12 and the suction base mechanism 14, the purpose of which will also be discussed later.

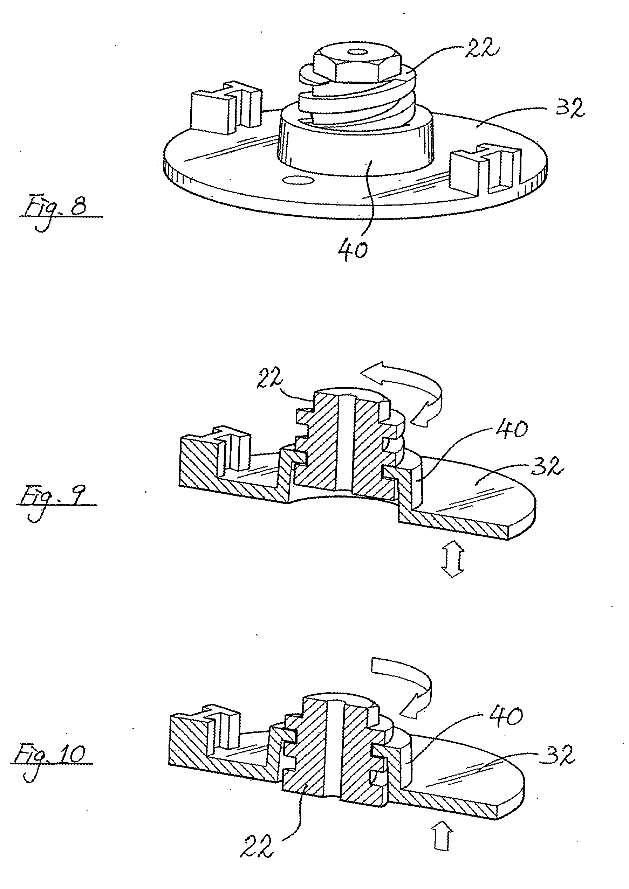

As shown in Fig. 7, the suction pad 26 includes a narrower circular plate 42 (from which the posts 28 extend) embedded within a raised centre part 43 of a broader circular resilient suction pad 44 with a circular outer edge 46. The pad 44 may be made of a resilient material, such as natural rubber or a synthetic rubber material.

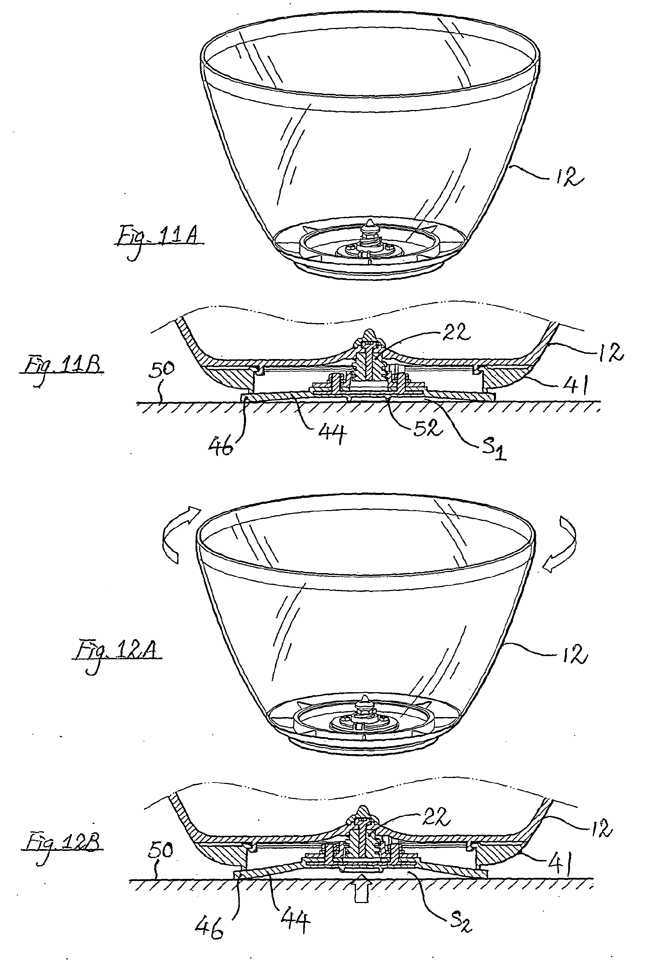

As shown in Figs. 8 to 10, when the screw 22 is received within the internally threaded cavity of the post 40 of the plate 32, the screw 22 may be swivelled or rotate relative to the plate 32 in either direction to vary the relative position between the plate 32 and the screw 22. In particular, swivelling/rotational movement of the screw 22 will cause the plate 32 to move towards or away from the screw 22. For example, and as shown in Fig. 10, clockwise swivel or rotation of the screw 22 will bring the plate 32 closer to the screw 22 whereas anti-clockwise swivel or rotation of the screw 22 will cause the plate 32 to move away from the screw 22.

Turning now to Figs. 11A to 12B, it can be seen in particular in Figs. 11B and 12B that the annular ring 41 is positioned between and abuts the bottom 16 of the bowl 12 and the upper surface adjacent the circular outer edge 46 of the pad 44. The distance between the bowl 12 and the outer edge 46 of the pad 44 is therefore kept unchanged during rotational movement of the bowl 12 relative to the suction base mechanism 14.

By way of such an arrangement, and as shown in Figs. 11A and 11B, when the salad spinner 10 is placed on a support surface 50, the outer edge 46 of the pad 44 and an inner concentric annular ridge 52 (see also Fig. 3) rest on the surface 50. When the bowl 12 is swivelled clockwise by a user, e.g. through an angle of 90°, this will bring about a corresponding clockwise rotation of the screw 22. However, by reason of the existence of the annular ring 41, the distance between the bowl 12 and the outer edge 46 of the pad 44 cannot be shortened, the raised centre part 43 with the concentric annular ridge 52 is therefore brought upwardly towards the bowl 12, to the position as shown in Figs. 12A and 12B.

By comparing Figs. 11B and 12B, it can be clearly seen that the volume of the space S₁ between the pad 44 and the support surface 50 in Fig. 11 B is smaller than that of the space S₂ between the pad 44 and the support surface 50 in Fig. 12B. The air pressure in the space S₁ is close to the ambient atmospheric pressure. However, because of the increased volume in the space S₂, the air pressure in the space S₂ is reduced and is thus smaller than the ambient atmospheric pressure. The atmospheric pressure will therefore press the pad 44, and thus the salad spinner 10, against the support surface 50, resulting in a suction force securing the salad spinner 10 to the support surface 50.

To release the engagement between the pad 44 and the support surface 50, the bowl 12 is swiveled in the opposite direction, to lower the centre part 43 of the pad 44 back to the position as shown in Fig. 11B, in which case because of the decrease in the volume of the space S₁, the pressure inside the space S₁ is increased back to the ambient atmospheric pressure, thus allowing the pad 44 (and thus the salad spinner 10) to be detached from the support surface 50 manually.

It should be understood that although the present invention has so far been described in the context of a salad spinner, it is apparent to the persons skilled in the art that the suction base mechanism may be employed in other kitchen utensils, such as meat chopper, potato chipper or electric blender.

It should also be understood that the above only illustrates an example whereby the present invention may be carried out, and that various modifications and/or alterations may be made thereto without departing from the spirit of the invention. It should also be understood that various features of the invention which are, for brevity, described here in the context of a single embodiment, may also be provided separately or in any appropriate sub-combinations.

## Claims

1. A kitchen utensil including a body member and a suction member adapted to rest on a support surface, wherein when said suction member rests on said surface, said body member is swivellable relative to said suction member between a first position in which the space between said suction member and said surface is of a first volume and a second position in which the space between said suction member and said surface is of a second volume which is larger than said first volume to releasably secure said utensil to said surface.

2. A kitchen utensil according to Claim 1 wherein when the body member is in the second position, the air pressure in the space between said suction member and said surface is lower than the ambient atmospheric pressure.

3. A kitchen utensil according to Claim 1 wherein said suction member is made at least partly of a resilient material.

4. A kitchen utensil according to Claim 1 wherein said body member is fixed with a threaded member which is swivellable relative to said suction member.

5. A kitchen utensil according to Claim 4 wherein said threaded member is externally threaded.

6. A kitchen utensil according to Claim 5 wherein said externally threaded member is threadedly engaged with an internally threaded member fixed with said suction member.

7. A kitchen utensil according to Claim 1 wherein said suction member has an outer edge adapted to abut said support surface and wherein the distance between said body member and said outer edge of said suction member remains substantially unchanged during movement of said body member between said first and second positions.

8. A kitchen utensil according to Claim 7 wherein said outer edge of said suction member is substantially annular in shape.

9. A kitchen utensil according to Claim 8 wherein said suction member further includes an inner annular ridge substantially concentric with said outer edge.

10. A kitchen utensil according to Claim 9 wherein said inner annular ridge abuts said support surface when said body member is in said first position and said inner annular ridge is raised from said support when said body member is in said second position.

11. A kitchen utensil according to Claim 1 wherein said body member is swivelled relative to said suction member between said first and second positions through generally 90°.

12. A kitchen utensil according to Claim 1 wherein said body member is swivellable relative to said suction member in a first direction to move from said first position to said second position, and said body member is swivellable relative to said suction member in a second opposite direction to move from said second position to said first position.

13. A kitchen utensil according to Claim 1 wherein said body member is manually operable to move between said first and second positions.

14. A kitchen utensil according to Claim 1 wherein said utensil is a salad spinner.

15. A kitchen utensil according to Claim 14 wherein said body member includes an outer bowl.
